# EUROPEAN PATENT SPECIFICATION

(11) **EP 1 519 076 B1**
(45) Date of publication and mention of the grant of the patent: **18.05.2011**
(21) Application number: 04255733.0
(22) Date of filing: 21.09.2004
(51) Int. Cl.: F16G 11/00, H02G 7/05

(54) **Dead end cable fitting**
Seilabspannklemme
Dispositif d'ancrage de câble

(30) Priority: 23.09.2003 GB 0322275
(43) Date of publication of application: 30.03.2005
(73) Proprietor: Preformed Line Products (GB) Limited, Andover, Hampshire SP12 3LH (GB)
(72) Inventor: Carley, Stephen William, Romsey Hampshire, SO51 0NN (GB); Mackie, Richard Bonar, Salisbury Wiltshire, SP5 4NQ (GB); Kidd, Gavin James, Andover Hampshire, SP10 3PE (GB)
(74) Representative: Dawson, Elizabeth Ann

(56) References cited:
- DE-A1- 3 338 190
- FR-A- 2 086 264
- GB-A- 992 717
- US-A- 2 943 135
- US-A- 2 998 696
- US-A- 3 080 631
- US-A- 3 847 491
- US-A- 4 523 355

## Description

The present invention relates to a dead end fitting for use in securing cables, and in particular to a fitting for use with blown cable systems.

### BACKGROUND TO THE INVENTION

In applications where a cable span is required between two points, it is known to secure the cable using fittings which grip the cable and are attached to suitable fixings. A typical application for such 'dead end' fittings is in an aerial cable span between a pole and a house, for example in cables for communication applications.

Conventional dead end fittings may comprise structural reinforcing rods having a helical form, which are wrapped around the cable to grip it, and a looped component with helical legs, which is then attached to the cable by wrapping the helical legs around it and attached to a suitable fixing by the loop. Such components can be relatively difficult and time consuming to fit. Alternatively, a single component may be used, comprising a looped portion and two helical legs, whereby the legs are wrapped directly around the cable and the loop is used to fix the fitting. This kind of component can lead to a crushing of the cable at the point where the cable exits the fitting, and also a sharp radius of curvature at this point, where the cable drops away from the looped portion.

It is also known to install media such as fibre optic cables by installing an outer cable or conduit, and blowing the fibre optic cable through the outer cable once the span is in place. Using such a method, it is important to minimise the resistance of the cable to the blown medium, by reducing sharp curvature in the cable, which could also introduce signal distortion in the blown medium. Furthermore, it is important to avoid crushing of the outer cable in this application, in order to aid installation.

It is therefore desirable to provide a dead end fitting which reduces the risk of crushing the cable, and which minimises sharp curvature in the cable, in order to provide a fitting particularly suitable for use in blown cable applications.

DE 33 38 190 A1 discloses a stay device for optical information cables which run in the vicinity of high-voltage lines. A first component of the device comprises a plurality of conductive wires wrapped protectively around the optical cable, and the wrapped portion of the cable is then gripped by a second component comprising a plurality of wires formed into a mounting loop and gripping legs which are wrapped helically around the first component.

### SUMMARY OF THE INVENTION

The present invention provides a component for securing a cable, as defined in claim 1.

Due to the cable routing section, the fitting does not crush the cable, as standard dead ends tend to do. The cable routing section advantageously controls the bending radius of the cable, which has the effect of both assisting the installation of the blown medium, and reducing signal distortion. The routing of the cable is more controlled, and also the cable itself is prevented from being deformed or damaged.

The invention also provides a helical fitting comprising a component as described above, and a further helical component arranged, in use, to wrap around the cable adjacent to the cable routing means of the first component.

### BRIEF DESCRIPTION OF THE DRAWING

An embodiment of the invention will now be described by way of example only and with reference to the accompanying drawing, in which:

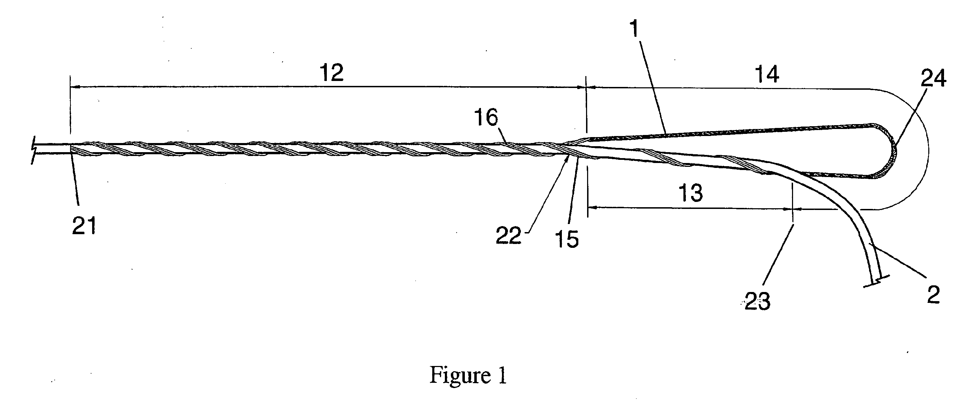

Figure 1 shows the fitting according to an embodiment of the invention, in position, fitted to a cable.

### DESCRIPTION OF A PREFERRED EMBODIMENT

The fitting itself is typically made from wire (e.g. galvanised or stainless steel), plastic, or any other suitable weatherproof material, and may comprise several wires bonded together to form a single component. The material of the fitting may be uncoated, or coated to blend in with the cable or the surroundings. The fitting is formed into an arcuate portion 24 with two extending helical legs 15, 16. A first one of the helical legs 15 includes a cable routing portion adjacent to the arcuate portion, as described further below.

When applied to a cable 2 as shown in Figure 1, the helical legs are wrapped around the cable to effectively form a double helix with the cable running along the axis, and the arcuate portion forming the loop portion 14 at one end of the fitting. The legs therefore grip the cable, and the fitting can be used to attach the cable to a fixing point by means of the loop portion, e.g. by hooking the loop over a suitable fixing. In order to position the cable across a span, a fitting would typically be provided at each end of the span, attached to respective fixing points.

The cable routing portion included in the first helical leg 15 does not have a corresponding helical portion in the second helical leg 16, and forms a single helix around the cable, in order to control the routing of the cable as it leaves the fitting. The helical shape of the cable routing portion may have a different pitch length from the remainder of the helical legs, and may guide the cable along a particular path appropriate to the application.

Figure 1 illustrates the fitting 1 in position on a cable 2. The fitting 1 comprises three main sections: a gripping portion 12, the cable routing portion 13, and the cable loop portion 14.

First, the gripping portion 12 is formed by the double helix of the helical legs 15, 16, wrapped around the cable as described above. When the fitting is in position on a cable, the gripping portion 12 extends from an end 21 of the fitting, corresponding to the distal ends of the helical legs, to a crossover point 22. The crossover point 22 is the point at which the double helix ends and where, in a conventional drop wire fitting, the cable would exit the fitting and drop downwards. The gripping portion enables the fitting to grip the cable, and transfers the tensile load on the cable to the fitting. The helical legs may be of different lengths, so that the legs end at different points on the cable at the end 21 of the fitting. Furthermore, the distal ends of the legs may be shaped so as to be angled away from the cable when the fitting is in position. This prevents the ends of the legs from scoring the cable during application, or when in position, which could reduce the breaking load or otherwise damage the cable.

In the present embodiment, the cable routing portion 13 extends in the first helical leg 15 from the crossover point 22 to a cable exit point 23. As can be seen in Figure 1, the fitting 1 is arranged such that the helical portion of the second helical leg 16 finishes at the crossover point 22, such that at this point the leg becomes substantially straight as it extends towards the looped end of the fitting.

The cable routing portion itself acts to guide the cable along the first leg 15 between the crossover point 22 and the cable exit point 23. The effect of this is to control the curvature of the cable between these points, and to provide a controlled exit of the cable from a single helical guide, which reduces both the curvature at the exit point and the tendency of the fitting to crush the cable at this point. The routing of the cable through the fitting is therefore as straight as possible, which leads to minimising the resistance of the cable to the blown medium when the medium is installed.

By contrast, in a conventional drop wire fitting, there is increased curvature where the cable leaves the fitting at the crossover point, making installation of a blown medium more difficult and increasing signal distortion. Furthermore, there is a greater crushing effect where both helical legs grip the cable at the exit point.

The cable loop portion 14 can be seen in Figure 1, extending from the crossover point 22 on the second leg 16 to the cable exit point 23 on the first leg 15, via the arcuate portion 24 at one end of the fitting. The loop portion is used to attach the fitting to a fixing point, using a hook, bracket, or any other suitable fixing. A thimble component may be used for attachment of the loop to the fixing.

In Figure 1, the fitting 1 is shown with the looped portion 14 oriented in a vertical plane, with the cable routing portion 13 guiding the cable towards a downward path. However, it will be appreciated that the fitting can be used in different orientations, for example with the looped portion 14 in a substantially horizontal plane, which would be particularly suitable for mounting the loop 24 over a vertical hook-type fixing. In this case, the cable routing portion 13 may be used to guide the cable to one side. It will also be appreciated, however, that the cable routing portion may guide the cable in various directions, depending on the shape of the routing portion and the looped portion. For example, in the case where the looped portion is arranged substantially in a horizontal plane, the routing portion might guide the cable not only to one side but also downwards to some extent. In such a case, the looped portion may not lie entirely in a single plane.

When the cable is installed in position using the fittings, the cable in the routing portion 13 is substantially in line with the tensile load at the crossover point 22, which reduces the risk of unacceptable bend radii being caused at the crossover point under high tensile loads.

The fitting may be used with different profiles of cable, for example circular or 'figure 8' profiles. Furthermore, since the fitting is a single component which wraps simply around the cable, it may be applied easily, without the need for special tools, and may be of a particularly light construction.

The gripping portion 12 may be provided with a controlled amount of grit applied to the internal surface of the helical legs, in order to assist in gripping the exterior of the cable. Other suitable additives or coatings, or surface finishes such as knurling, may also be used to achieve a similar effect. The grip provided on the cable by the fitting can be controlled to provide a desired effect in the event that the cable tension reaches a predetermined threshold. Either the grip can be sufficient that the cable breaks when the threshold tension is reached, or the grip provided by the fitting can be arranged to allow the cable to slip with a controlled slip load, before the breaking tension is reached.

Although the cable routing portion 13 of the described fitting provides a beneficial routing of the cable away from the crossover point 22, it is also possible to use this fitting in combination with an additional fitting (not shown) to provide additional assistance in routing the cable and preventing excess curvature. Such an additional fitting may comprise a helical component which, in use, wrapped around the cable and extends from the cable routing portion of the first fitting along the exited cable, effectively providing an extension of the routing portion 13 of the fitting shown in Figure 1.

Furthermore, due to its easy application to the cable, the described fitting can be used as an application tool for installing the cable, and a different fitting used for permanently securing the cable. In other words, the described fitting may easily be attached to the cable, and used to put the cable in position, and then may be removed once the second fitting is attached to the correctly positioned cable.

While the fitting has been described with particular reference to blown fibre optic cables, it may be used with other blown media, or to secure other types of cable in general, and may be used in aerial or ground applications. Furthermore, the fitting may be applied to the cable with or without the medium installed.

## Claims

1. Component for securing a cable, comprising a single elongated member including an arcuate portion (24) and two extending legs (15, 16), the legs each comprising a helical portion and arranged, in use, to wrap around the cable (2) to form a cable gripping portion in the form of a double helix which begins at a crossover point (22) where the legs (15, 16) extending from the arcuate portion (24) first cross,
**characterized in that**
the member further comprises a cable routing portion (13), extending between the crossover point (22) and a cable exit point (23) at which the cable (2) exits the component, for guiding the cable (2) away from the axis of the double helix, the cable routing portion (13) comprising a further helical portion in only a first one (15) of the legs to provide a single helix, in use, around the cable (2),
and wherein the portion of the second leg (16) extending from the crossover point (22) adjacent to the cable routing portion (13) in the first leg (15) is substantially straight.

2. Component according to claim 1, wherein the cable routing portion (13) is arranged to control the curvature of the cable (2), in use, between the crossover point (22) and the cable exit point (23), whereby to reduce the curvature at the exit point.

3. Component according to claim 1 or 2, wherein the further helical portion forming the cable routing portion (13) has a different pitch length from the remainder of the helical legs (15, 16).

4. Component according to claim 1, 2 or 3, wherein the member is made of stainless steel or galvanised steel wire.

5. Component according to any of claims 1 to 4, wherein the distal end of one of the legs (15, 16) extends further than the other leg.

6. Component according to any preceding claim, wherein the distal end of at least one leg is formed so as to lie away from the cable (2), when the component is fitted, in use, to the cable (2).

7. Component according to any preceding claim, wherein the helical portion of at least one leg is provided with a surface finish or surface coating which provides additional grip on the cable (2), in use.

8. Component according to claim 7, wherein the surface coating comprises grit provided on the surface of the helical portion.

9. Helical fitting comprising a component according to any preceding claim, and a further helical component arranged, in use, to wrap around the cable (2) adjacent to the cable routing means (13) of the first component.

## Patentansprüche

1. Komponente zum Befestigen eines Kabels, die ein einzelnes längliches Element umfasst, das einen bogenförmigen Abschnitt (24) sowie zwei vorstehende Schenkel (15, 16) enthält, wobei die Schenkel jeweils einen spiralförmigen Abschnitt umfassen und so eingerichtet sind, dass sie in Funktion das Kabel (2) umschlingen und so einen Kabel-Greifabschnitt in Form einer Doppelspirale bilden, die an einem Überkreuzungspunkt (22) beginnt, an dem sich die Schenkel (15, 16), die von dem bogenförmigen Abschnitt (24) vorstehen, zuerst überkreuzen,
**dadurch gekennzeichnet, dass**
das Element des Weiteren einen Kabel-Führungsabschnitt (13) umfasst, der sich zwischen dem Überkreuzungspunkt (22) und einem Kabel-Austrittspunkt (23) erstreckt, an dem das Kabel (2) aus der Komponente austritt, um das Kabel (2) von der Achse der Doppelspirale wegzuführen, und der Kabel-Führungsabschnitt (13) einen weiteren spiralförmigen Abschnitt in nur einem ersten (15) der Schenkel umfasst, der in Funktion eine Einzelspirale um das Kabel (2) herum bildet,
und wobei der Abschnitt des zweiten Schenkels (16), der sich von dem Überkreuzungspunkt (22) an den Kabel-Führungsabschnitt (13) angrenzend in dem ersten Schenkel (15) erstreckt, im Wesentlichen gerade ist.

2. Komponente nach Anspruch 1, wobei der Kabel-Führungsabschnitt (13) so eingerichtet ist, dass er die Krümmung des Kabels (2) in Funktion zwischen dem Überkreuzungspunkt (22) und dem Kabel-Austrittspunkt (23) reguliert und so die Krümmung an dem Austrittspunkt verringert.

3. Komponente nach Anspruch 1 oder 2, wobei der weitere spiralförmige Abschnitt, der den Kabel-Führungsabschnitt (13) bildet, eine andere Schrittlänge hat als der Rest der spiralförmigen Schenkel (15, 16).

4. Komponente nach Anspruch 1, 2 oder 3, wobei das Element aus Draht aus rostfreiem Stahl oder verzinktem Stahl besteht.

5. Komponente nach einem der Ansprüche 1 bis 4, wobei sich das vordere Ende eines der Schenkel (15, 16) weiter erstreckt als der andere Schenkel.

6. Komponente nach einem der vorangehenden Ansprüche, wobei das vordere Ende wenigstens eines Schenkels so ausgebildet ist, dass es von dem Kabel (2) entfernt liegt, wenn die Komponente in Funktion an dem Kabel (2) angebracht ist.

7. Komponente nach einem der vorangehenden Ansprüche, wobei der spiralförmige Abschnitt wenigstens eines Schenkels mit einer Oberflächenbehandlung oder Oberflächenbeschichtung versehen ist, die in Funktion zusätzlichen Halt an dem Kabel (2) bietet.

8. Komponente nach Anspruch 7, wobei die Oberflächenbeschichtung Körnung umfasst, die an der Oberfläche des spiralförmigen Abschnitts vorhanden ist.

9. Spiralförmiges Zubehörteil, das eine Komponente nach einem der vorangehenden Ansprüche sowie eine weitere spiralförmige Komponente umfasst, die so eingerichtet ist, dass sie in Funktion das Kabel (2) an die Kabel-Führungseinrichtung (13) der ersten Komponente angrenzend umschlingt.

## Revendications

1. Composant de fixation d'un câble, comprenant un seul élément allongé comportant une portion arquée (24) et deux pattes d'extension (15, 16), les pattes comprenant chacune une portion hélicoïdale et étant aménagées, en service, pour s'enrouler autour du câble (2) pour former une portion de prise de câble sous la forme d'une double hélice qui part d'un point de croisement (22) où les pattes (15, 16) s'étendant de la portion arquée (24) se croisent d'abord,
**caractérisé en ce que**
l'élément comprend en outre une portion de routage de câble (13) s'étendant entre le point de croisement (22) et un point de sortie de câble (23) où le câble (2) sort du composant pour guider le câble (2) à distance de l'axe de la double hélice, la portion de routage de câble (13) comprenant une autre portion hélicoïdale uniquement dans une première (15) des pattes pour former une hélice unique, en service, autour du câble (2),
et dans lequel la portion de la seconde patte (16) s'étendant du point de croisement (22) adjacent à la portion de routage de câble (13) dans la première patte (15) est sensiblement droite.

2. Composant selon la revendication 1, dans lequel la portion de routage de câble (13) est aménagée pour commander la courbure du câble (2) en service entre le point de croisement (22) et le point de sortie de câble (23) de manière à réduire la courbure au point de sortie.

3. Composant selon la revendication 1 ou 2, dans lequel l'autre portion hélicoïdale formant la portion de routage de câble (13) a une longueur de pas différente du restant des pattes hélicoïdales (15, 16).

4. Composant selon la revendication 1, 2 ou 3, dans lequel l'élément est fabriqué en fil d'acier inoxydable ou d'acier galvanisé.

5. Composant selon l'une quelconque des revendications 1 à 4, dans lequel l'extrémité distale d'une des pattes (15, 16) s'étend au-delà de l'autre patte.

6. Composant selon l'une quelconque des revendications précédentes, dans lequel l'extrémité distale d'au moins une patte est formée pour pouvoir s'étendre au-delà du câble (2) lorsque le composant est ajusté, en service, au câble (2).

7. Composant selon l'une quelconque des revendications précédentes, dans lequel la portion hélicoïdale d'au moins une patte présente un fini de surface ou un revêtement de surface qui assure une prise additionnelle au câble (2) en service.

8. Composant selon la revendication 7, dans lequel le revêtement de surface comprend des particules grossières sur la surface de la portion hélicoïdale.

9. Assemblage hélicoïdal comprenant un composant selon l'une quelconque des revendications précédentes et un autre composant hélicoïdal aménagé, en service, pour s'enrouler autour du câble (2) adjacent aux moyens de routage de câble (13) du premier composant.
